# EUROPÄISCHE PATENTANMELDUNG

(11) **EP 2 357 390 A2**
(43) Veröffentlichungstag der Anmeldung: **17.08.2011**
(21) Anmeldenummer: 11401014.3
(22) Anmeldetag: 07.02.2011
(51) Int. Cl.: F16L 37/14, F16L 25/00

(54) **Anschlussverbindung für ein Rohr**

(30) Priorität: 06.02.2010 DE 202010000135 U; 17.05.2010 DE 102010016972
(71) Anmelder: AZ Vermögensverwaltung GmbH & Co. KG., 61276 Weilrod (DE)
(72) Erfinder: Zimmermann, Dirk, 61276 Weilrod (DE)
(74) Vertreter: Thomas, Matthias

(57) **Zusammenfassung**

Die Erfindung betrifft eine Anschlussverbindung für ein Rohr (27) mit einem profilierten Außendurchmesser, bei der ein ringförmiges Dichtelement (31,39) mit einem von der Kreisform abweichenden Querschnitt verwendet ist.

Die Erfindung betrifft insbesondere eine Anschlussverbindung für Wellschlauchenden ringgewellter Wellschläuche (27).

## Beschreibung

Die Erfindung betrifft eine Anschlussverbindung für ein Rohr mit einem Rohrende, das wenigstens an seinem Außendurchmesser profiliert ist. Sie betrifft insbesondere das Dichtsystem für eine solche Anschlussverbindung. Ebenso für eine Anschlussverbindung für ein ringgewelltes Wellrohr oder einen ebensolchen Wellschlauch, die prinzipbedingt bereits profiliert sind, eine Anschlussverbindung für ein profiliertes Rohr, die bei der Herstellung der Verbindung keine über die vorhandene Profilierung hinausgehende Veränderung am Rohr hervorruft und die zugleich entweder fest oder lösbar ausgeführt sein kann.

Es ist seit langem bekannt, Rohrenden von dünnwandigen Rohren vor der Herstellung einer Verbindung umzuformen. Typische Anwendungsfälle für derartige Verbindungen sind die Bördel der Bremsleitungen von Fahrzeugen und der Einspritzleitungen von Dieselmotoren. Diese Verbindungen werden allerdings nur ausgeführt, um einen metallischen Dichtbund für die Herstellung einer metallischen Abdichtung zu erhalten.

Ebenso ist bekannt, dass Verbindungen von Wellrohren oder Wellschläuchen untereinander oder mit anderen Baueinheiten wegen des Wellenprofils schwer herstellbar sind. Im Rohrleitungsbau bekannte Verbindungselemente scheiden von vornherein aus.

Es ist deshalb versucht worden, die Verwendbarkeit herkömmlicher Verbindungselemente dadurch zu erzeugen, dass an den Wellrohr- oder Wellschlauchenden jeweils speziell geformte metallische Anschlussbauteile angeordnet werden, mit denen dann unter Verwendung bekannter Bauelemente ein Anschluss ausführbar wird. Die Anschlussbauteile werden mit den Wellrohren oder -schläuchen gewöhnlich durch Schweiß- oder Lötverfahren, gelegentlich auch mit Hilfe von Klemm- oder Pressverbindungen fest verbunden. Entsprechende Vorschläge sind in FR 2 542 845 A1, DE 195 16 147 A1, EP 0 939 265 A2 und WO 2006/136151 A1 enthalten.

Werden Anschlussverbindungen unter Verwendung besonderer Anschlussbauteile erzeugt, entsteht ein erheblicher materieller und finanzieller Aufwand. Die zusätzlichen Anschlussbauteile führen zu einer Gewichtserhöhung damit hergestellter Leitungssysteme, wodurch deren Einsatzfähigkeit im Leichtbau eingeschränkt ist und der wesentliche Vorteil von Wellrohren oder Schläuchen teilweise wieder zunichte gemacht wird.

Eine weitere Möglichkeit, Wellrohre oder -schläuche anzuschließen, wurde darin gefunden, dass der endständige Wellenberg durch Stauchung bei gleichzeitiger Durchmesservergrößerung zu einem endständigen Flansch verformt wird, der dann gegebenenfalls mit beigelegten Dichtungsmitteln die Herstellung einer dichten Anschlussverbindung ermöglicht. Diese Lösung ist in DE 93 20 431 U1 beschrieben.

Gleich wirkende Verbindungen, bei denen der endständige Flansch jedoch erst bei der Herstellung der Anschlussverbindung geformt wird, sind in US 2,363,586, US 3,008,738 und EP 0 801 258 A2 enthalten.

Ein Verfahren zur Herstellung von endständigen Dichtflanschen an einem durch Streckung des Wellrohres oder -schlauches ausgeformten zylindrischen Endstück ist in EP 0 557 594 B1 beschrieben.

Bei Anschlussverbindungen mit einem gestauchten endständigen Flansch ist nachteilig, dass Anschlüsse mit beigelegten Dichtelementen (Flachdichtungen) teilweise aufgrund normativer Festlegungen nicht eingesetzt werden dürfen. Die notwendige Stauchung des endständigen Wellenberges birgt auch ein Risiko in sich, dass vor der Stauchung aufzuschiebende Bauteile, wie Überwurfmuttern, auch vergessen werden können, wodurch die ausgeführte Stauchung unbenutzbar wird.

Bei Anschlussverbindungen, die die Stauchung erst bei der Herstellung der Verbindung erzeugen, besteht zudem ein erhöhtes Risiko von Fehlverbindungen. Es ist nicht auszuschließen, dass bei der Herstellung solcher Verbindungen eine unzulässige Verschiebung des Wellschlauches bzw. der Stauchelemente vorkommt, sodass die Anschlussverbindung entweder überhaupt nicht dicht werden kann oder die geforderten Parameter nicht dauerhaft erreicht werden.

Es besteht deshalb ein Bedarf an Anschlussverbindungen, die ohne Veränderungen am Profil eines Wellrohres oder -schlauches und mit Hilfe einer Abdichtung durch elastische Dichtelemente erzeugt werden. Insbesondere besteht auch das Bedürfnis, die Wellrohre oder -schläuche, die Befestigungsmittel und die Dichtelemente nach einer Demontage erforderlichenfalls erneut verwenden zu können.

Ein solcher Bedarf besteht auch im Hinblick auf die gemeinsame Verarbeitung von Glatt- und Wellrohren bzw. Wellschläuchen innerhalb einer Installation.

Es ist bereits bekannt, Wellrohre oder -schläuche in Aufnahmehülsen durch formhinterschneidende Elemente (Krallen, Noppen, Gewinde und dgl.) zu halten. Solche Anschlussverbindungen, die gewöhnlich bei Staubsaugerschläuchen und ähnlichen Anwendungen eingesetzt werden, sind von vornherein nicht ausreichend dicht, da bei solchen Anwendungen kein Dichtheitserfordernis besteht.

Es ist bekannt, dass solche Verbindungen durch zusätzlich einzubringende Dichtelemente oder auch durch Dichtmassen abgedichtet werden können. So ist in AT 502 404 B1 vorgeschlagen, einen herkömmlichen Rundring einzusetzen.

Rundringe sind jedoch für eine Verwendung mit Wellrohren oder -schläuchen nicht vorgesehen, weshalb Anwender aus den genormten Sortimenten der Rundringe gemäß DIN 3771 nur eine Auswahl vornehmen können. Dabei kann im Einzelfall ein Ring gefunden werden, der einen Verschluss des abzudichtenden Querschnittes ermöglicht. Entsprechende Anpassungen setzen oft eine Dehnung oder Stauchung der Rundringe voraus, die sich allerdings nach den Vorgaben in DIN 3771 innerhalb zulässiger Bereiche halten muss.

Nach den Vorgaben gemäß DIN 3771 und vergleichbarer Normen ist für die Verwendung von Rundringen als Dichtmittel stets eine Nut mit einem rechteckigen Querschnittsprofil auszuführen. Hinsichtlich der Abmessungen der Nut, der Oberflächenbeschaffenheiten sowie der Maßtoleranzen bestehen strenge Anforderungen.

Die Herstellung einer dichten Verbindung zwischen dem Ende eines Wellrohres oder -schlauches in einer Bohrung, in der in einer Nut ein Rundring eingelassen ist, ist schlechterdings unmöglich. Wellrohrprofile sind sehr variabel und können bei der praktischen Anwendung zudem einer Dehnung oder Stauchung unterliegen. Für die Herstellung einer dichten Verbindung wäre es aber zwingend notwendig, dass der Wellenberg eines Wellrohres oder -schlauches gegenüber dem Rundring abdichtet. US 5,857,716 A schlägt neben anderen eine solche Lösung vor. Eine solche Sollposition ist jedoch nicht zu gewährleisten.

Es ist deshalb auch schon vorgeschlagen worden, bestimmte aus dem Sortiment an Rundringen gezielt ausgewählte Größen in ein Wellental eines Wellschlauches einzulegen und dieses Wellental gewissermaßen als Ringnut zu betrachten. Entsprechende Vorschläge sind in DE 201 15 531 U1 und DE 200 04 316 U1 enthalten.

Nach einem Vorschlag in DE 10 2008 050 073 A1 kann eine solche Verbindung in einer Hülse durch eine Verstiftung oder eine Vergussmasse fixiert werden, wobei hinsichtlich der weiteren Ausgestaltung der Hülse völlige Freiheit besteht. Auf der der Anschlussverbindung abgewandten Seite können deshalb auch aus dem Rohrleitungsbau bekannte Anschlussbauformen ausgeführt sein.

Diese Lösungen sind auch insoweit nachteilig, dass sie nur bei einer begrenzten Zahl von Anwendungsfällen einsetzbar sind. Ringgewellte Wellrohre oder Wellschläuche sind mit einem mehr oder weniger deutlich ausgeprägten sinusförmigen Wellenprofil ausgeführt. Die Profilparameter sind bei verschiedenen Herstellern sehr unterschiedlich und können wie bereits erwähnt durch Dehnung oder Stauchung noch nachträglich verändert sein. Mithin können Anbieter von Verbindungslösungen, die Rundringe verwenden, nur auf eine begrenzte Zahl solcher Möglichkeiten zurückgreifen, die sie vorher gezielt aussuchen mussten. Zudem liegt eine solche Verwendung von Rundringen außerhalb normativer Vorgaben.

Dies gilt letztlich auch für rillenförmige Vertiefungen, die durch Umformen in Glattrohren eingebracht wurden.

Da die Anbieter solcher Verbindungslösungen die Rundringe außerhalb bestehender Normen einsetzen, müssen sie das gesamte Risiko einer solchen Verbindungslösung selbst tragen.

Das häufig einer Sinuskurve angenäherte Nutprofil hat den Nachteil, dass ein dort eingelegter Rundring bei einem größeren Durchmesser zunächst nicht bis zum Nutgrund reichen kann. Selbst bei der Montage in einer Aufnahmebohrung wird er oft nicht bis zum Nutgrund gedrückt. Während des Montagevorganges erfolgt dann eine Pressung im Bereich des Außendurchmessers des Rundringes mit der Folge, dass sich dieser an die Wand des Wellrohres anlegt und dabei eine Deformation des Rundringes eintritt. Dies hat zur Folge, dass in der Dichtebene des Rundringes gegenüber der Aufnahmebohrung eine zu geringe Flächenpressung verbleibt. Daraus resultierend können solche Dichtsysteme nur bei geringen Druckstufen eingesetzt werden.

Es ist nicht möglich, höhere Druckstufen durch die Verwendung von Rundringen mit geringerer Querschnittsfläche zu realisieren, da die vorhandenen Eigenschaftsbilder der Wellrohre oder -schläuche einen Mindestquerschnitt der Rundringe im Ausgangszustand vor Herstellung der Verbindung erfordern. Anderenfalls kann die Dichtheit einer solchen Verbindung nicht gewährleistet werden.

Da jedoch die Verbreitung von Wellrohren oder -schläuchen stetig zunimmt, werden die aus den eher zufällig gefundenen Paarungen zwischen Wellrohrprofil und Rundring resultierenden Probleme immer offenkundiger. Bestehenden Bedürfnissen, ein breites Sortiment an Wellrohren oder -schläuchen in einer Vielzahl von Abmessungen, einer Vielzahl von Wellenprofilen und in höheren Druckstufen einzusetzen, kann mit den bekannten Lösungen nicht entsprochen werden.

Es ist deshalb Aufgabe der Erfindung, eine Anschlussverbindung für ein Rohr mit einem rillenförmig profilierten Rohrmantel vorzuschlagen, die unter Einsatz eines elastischen Dichtelements die Herstellung zuverlässig wirkender Dichtsysteme ermöglicht.

Diese oben stehende Aufgabe wird gelöst durch eine Anschlussverbindung mit den Merkmalen des Patentanspruches 1. Neben- und nachgeordnete Patentansprüche betreffen weitere Ausgestaltungen der im Patentanspruch 1 in Anspruch genommenen Erfindung und beschränken dessen Schutzbereich nicht.

In der nachstehenden Beschreibung, den Ausführungsbeispielen und den Patentansprüchen werden die verwendeten Begriffe mit folgendem Bedeutungsinhalt verwendet:
Rohr - ist jedes zylindrische Gebilde, das einen endlichen Durchmesser, eine durchgehende Kernbohrung und eine endliche Länge hat. Als Rohr werden im Sinne der vorliegenden Erfindung auch Hülsen mit vergleichsweise kurzer Gesamtlänge angesehen.
Rohrende - ist das mit einem Befestigungsbauteil zu verbindende Ende eines Rohres mit einem profilierten Außendurchmesser.
Profilierter Außendurchmesser - ist ein wenigstens im Bereich des Rohrendes vorhandenes, von der zylindrischen Form abweichendes Profil eines Rohrendes mit wenigstens einer umlaufenden rillenförmigen Vertiefung.
Rillenförmige Vertiefung — ist eine in ein zylindrisches Rohr eingebrachte Vertiefung mit nicht rechteckförmigem Querschnitt, eine durch Umformen erzeugtes, am Rohrende umlaufende Einschnürung eines dünnwandigen Rohres oder das Ringwellenprofil eines Wellschlauches.
Wellschlauch — ist ein sich längs erstreckendes rohrförmiges Gebilde, dessen Wandung wenigstens in Teilbereichen und wenigstens an den Enden ein quer oder schräg verlaufendes Rippenprofil aufweist. Begrifflich mit erfasst sind Wellrohre mit einer größeren Biegesteifigkeit.
Wellschlauchende — ist der jeweilige Endbereich eines Wellschlauches, der wenigstens zwei beabstandet zueinander angeordnete Wellentäler hat.
Dichtelement — ist ein elastisches Bauteil, das geeignet ist, vorhandene Einschnürungen, Rillen oder Wellentäler weitgehend auszufüllen und Dichtheit zwischen einem Rohr oder Wellschlauch und einer Aufnahmebohrung herzustellen.
Profilring — ist ein ringförmiges elastisches Bauteil, das einen von der Kreisform abweichenden Querschnitt hat.
Aufnahmebohrung — ist eine Bohrung, die Bestandteil eines Leitungskreises und zur Aufnahme eines Rohr- oder Wellschlauchendes geeignet ist.
Dimensionsstabiler Ring — ist ein im Gebrauchszustand nicht verformbarer Ring, der vorzugsweise aus einem unter Belastung dimensionsstabilen Werkstoff besteht.
Befestigungsbauteil — ist ein beliebiges Bauteil, das geeignet ist, ein Wellschlauchende an einer Anschlussstelle zu befestigen. Hierbei sind insbesondere Überwurfmuttern, Flansche und Muffen eingeschlossen.

Eine Aufnahmebohrung enthaltendes Bauteil — ist ein beliebiges Bauteil, das wenigstens eine Aufnahmebohrung aufweist, die zu einem Leitungssystem gehört und wenigstens Mittel zur Herstellung einer festen Verbindung mit einem korrespondierenden Befestigungsbauteil hat. Eingeschlossen sind sowohl Einschraubstutzen als auch Aufnahmebohrungen aufweisende Körper, wie Ventilblöcke.

Nach der Erfindung wird eine Anschlussverbindung für ein Rohr dadurch hergestellt, dass ein beliebiges Rohrende mit wenigstens einer umlaufenden rillenförmigen Einschnürung mit einer passenden Aufnahmebohrung gepaart wird und ein in die rillenförmige Vertiefung eingelegtes Dichtelement die Abdichtung zwischen dem Rohrende und der Aufnahmebohrung sicherstellt. Hinzu kommen ferner geeignete Befestigungsmittel zur Fixierung der an der Anschlussverbindung beteiligten Bauteile zueinander.

Nach der Erfindung wird davon ausgegangen, dass die umlaufende Einschnürung einen beliebigen Profilquerschnitt haben kann und das zugehörige Dichtelement in seinem Querschnitt an die zu lösenden Aufgaben angepasst ist.

Die umlaufende Einschnürung kann bei dickwandigen Rohrenden beispielsweise durch spanende oder spanlose Formung erzeugt sein. Bei dünnwandigen Rohren wird ein Umformvorgang bevorzugt, wobei je nach zu lösender Aufgabe entweder in den Rohrmantel eine rillenförmige Vertiefung eingebracht wird oder beidseitig der Einschnürung Ausformungen ausgeführt werden, die später die Flanken der Einschnürung bilden.

In die Einschnürung wird ein Dichtelement in Ringform eingelegt, wobei der Ringquerschnitt von der Kreisform verschieden ist. Abhängig von dem Profil der Einschnürung kann ein solcher Ringquerschnitt einen dreieckigen, trapez-, rechteck-, oval- oder ellipsenförmigen Querschnitt haben. Die angegebenen Querschnittsformen sind dabei lediglich die geometrischen Grundformen für den konkret zu wählenden Querschnitt.

Nach der Erfindung wird ein Dichtelement in Ringform nach dem vorhandenen Nutquerschnitt und dem vorhandenen Durchmesser der Aufnahmebohrung ausgewählt, wobei darauf geachtet wird, dass die Einschnürung einerseits nahezu vollständig ausgefüllt ist und andererseits die Flächenpressung gegenüber den Kontaktflächen in der erforderlichen Größenordnung liegt.

Das Dichtelement in Ringform ist so dimensioniert, dass es beim Einlegen in die Nut auf jedem fall den Nutgrund erreicht und trotzdem eine ausreichende Flächenpressung gegenüber der Aufnahmebohrung erreicht wird. Dies kann unter Anderem auch durch ein Übermaß des Außendurchmessers des Dichtelements in Ringform erreicht werden, durch das beim Einschieben des Rohrendes eine Schrägstellung des Dichtelements erzwungen wird. Dies ist die bei Wellschlauchenden bevorzugte Lage des Dichtelements.

Mithin wird ein optimiertes System einer Abdichtung mit einem in einer beliebig geformten Einschnürung eines Rohrendes liegenden ringförmigen Dichtelement in einer zu dem jeweiligen Rohrende angepassten Aufnahmebohrung vorgeschlagen.

Nach der Erfindung wird insbesondere eine Anschlussverbindung für einen Wellschlauch mit wenigstens an einem Ende vorhandenen parallel gewellten Wandungsprofilen dadurch erreicht, dass auf das Wellschlauchende ein Dichtelement aufgeschoben wird, das sich danach in einem der endständigen Wellentäler befindet und dieses wenigstens teilweise ausfüllt. Nach dem Aufschieben des Dichtelements kann das Rohrende in die entsprechende Aufnahmebohrung eingeschoben werden. Die Befestigung des Schlauchendes kann auf beliebige Weise, insbesondere mit den bekannten Befestigungsmitteln, wie Flansche, Überwurfmuttern, Renkverbindungen und dergleichen ausgeführt sein.

Eine besonders vorteilhafte und einfach herzustellende Verbindungslösung besteht darin, dass auf das Schlauchende zusätzlich ein dimensionsstabiler Ring aufgebracht wird, wobei es sich hier vorzugsweise um einen deformierbaren Ring handelt, der in einem der Wellentäler hinter dem Wellental des Dichtelements eingelegt wird, beim nachfolgenden Befestigen zwischen der Stirnseite der Aufnahmebohrung und dem Befestigungsmittel verklemmt wird und dabei das Schlauchende fixiert.

Die Aufnahmebohrung kann auch in einem Einschraubstutzen, einen Schottstutzen oder in einem Anschlussblock für die ankommende Leitung angeordnet sein.

Vorteilhaft dabei ist, dass eine solche Verbindung kostengünstig, schnell und einfach auch bei der Montage vor Ort erzeugt werden kann.

Dabei kann die Wellschlauchlänge bei der Montage bestimmt und nach dem Ablängen so weiter verarbeitet werden, dass auf das Wellschlauchende ein Befestigungsbauteil aufgeschoben wird. Daran schließt sich das Aufschieben eines dimensionsstabilen Ringes auf das Wellschlauchende an, wobei dieser Ring durch Spreizung zunächst soweit verformt wird, dass sein Innendurchmesser größer ist, als der Außendurchmesser des Wellschlauchendes. Im zweiten oder einem anderen, dahinter angeordneten, Wellental des parallel gewellten Wandungsprofils wird der dimensionsstabile Ring eingelegt, wobei er abhängig davon, ob er elastisch oder plastisch verformt wurde, gegebenenfalls wieder zusammengedrückt wird. Durch das Einlegen in ein Wellental des Wellschlauchendes erhält der dimensionsstabile Ring eine feste axiale Position auf dem Wellschlauchende.

Wenigstens im endständigen Wellental wird ein Dichtelement eingelegt.

Das so vorbereitete Wellschlauchende wird anschließend in eine Bohrung in einem die Bohrung umgebenden Bauteil eingeschoben, bis der dimensionsstabile Ring an einer Außenseite des umgebenden Bauteils anliegt. In dieser Lage wird dann das Befestigungsbauteil mit dem die Bohrung umgebenden Bauteil der Gestalt verbunden, dass der dimensionsstabile Ring zwischen diesen eingeklemmt und auf diese Weise das Wellschlauchende axial fixiert ist.

Das im endständigen Wellental angeordnete Dichtelement dichtet die Außenseite des Wellschlauchendes gegenüber der Bohrung ab, sodass Dichtheit dieser Verbindung hergestellt ist.

Der dimensionsstabile Ring ist ein einseitig offener Ring, der entweder unter Deformation oder durch elastische Verformung aufweitbar und schließbar ist.

Eine vorteilhafte Ausführungsform des dimensionsstabilen Rings besteht darin, dass dieser in seinem Umfang wenigstens eine Einschnürung hat, auf die sich beim Aufweit- und Schließvorgang die gesamte Verformungsarbeit konzentriert, während der Ring im übrigen seine Ausgangsform beibehält.

Ferner kann der dimensionsstabile Ring einen rechteck-, trapezförmigen, halbrunden oder einen an das Profil des Wellentals angepassten Querschnitt haben. Der Außendurchmesser des dimensionsstabilen Rings im geschlossenen Zustand ist in jedem Fall größer als der Außendurchmesser des Wellschlauchendes.

Anstelle einer ebenen Anlagefläche für den dimensionsstabilen Ring kann die aufnehmende Bohrung auch eine zylindrische Senkung haben, wodurch eine Führung des dimensionsstabilen Rings an seinem Außendurchmesser möglich ist.

Das Dichtelement ist ein Formteil aus einem elastischen Werkstoff.

Es kann ein an das Außenprofil des Wellrohres oder Wellschlauches angepasstes Profil haben. Ferner kann es in einem Querschnitt ausgeführt sein, dessen Umfangslinie im Kontaktbereich zu den Wellenbergen in etwa geradlinig verläuft, während sie im Bereich der Wellentäler und im Kontaktbereich zur Bohrung gewölbt ist.

Die Abdichtung der Anschlussverbindung kann durch die Anordnung eines zweiten Dichtelements in einem hinter dem endständigen Wellental vorhandenen Wellental verbessert werden. Hierbei ist der Einsatz eines geeigneten Rundrings möglich.

Das die Bohrung umgebende Bauteil kann im einfachsten Fall eine Hülse sein. Ebenso ist es möglich, dass ein Gewindestutzen, eine Fläche, eine Gewindehülse oder eine Muffe die Bohrung aufnehmen.

In Abhängigkeit von der Ausführungsform des umgebenden Bauteils wird ein Befestigungsbauteil kompatibler Art eingesetzt, wobei dieses zuerst auf das den Anschluss bildenden Wellschlauchende aufgeschoben wird. Bevorzugte Bauformen des Befestigungsbauteils sind Überwurfmuttern, Überwurfschrauben oder Losflansche.

Bei der Herstellung der Anschlussverbindung wird das vorbereitete Wellschlauchende mit dem Dichtelement in die Bohrung so weit eingeschoben, dass der dimensionsstabile Ring an der Bohrungsaußenseite anliegt. Daran anschließend wird das Befestigungsbauteil der Gestalt mit dem umgebenden Bauteil verbunden, dass der dimensionsstabile Ring zwischen beiden eingeklemmt ist und das Wellschlauchende dabei axial fixiert.

Es ist des Weiteren möglich, feste Verbindungen des Wellschlauchendes in einer Aufnahmebohrung herzustellen.

Eine Ausführungsform einer solchen Verbindung besteht darin, dass in die Aufnahmebohrung eine Rille zusätzlich eingearbeitet ist, die vom Umfang nach außen durch eine Verbindungsbohrung aus dem Befestigungsbauteil herausgeführt ist. Nach dem Einschieben des Wellschlauchendes mit dem aufgeschobenen Dichtelement wird durch die Verbindungsbohrung eine Kapillare oder ein Draht eingeschoben, die in der Rille und in Verbindung mit einem korrespondierenden Wellental eine nahezu über den gesamten Umfang des Wellschlauchendes reichende Verbindung erzeugten. Der dabei entstehende Formschluss mit dem Wellschlauch sichert dieses gegen axiale Verschiebung. Diese Art der Verbindung ist nahezu unlösbar.

In gleicher Weise kann eine unlösbare Verbindung erzeugt werden, wenn anstelle eines Drahtes eine sich verfestigende oder eine durch eine chemische Reaktion aushärtende Masse über die Verbindungsbohrung eingespritzt wird.

Es ist weiterhin möglich, über die Verbindungsbohrung Teile in die Nut einzuführen, die einen Formschluss herstellen, aber zugleich ein Spiel zwischen Aufnahmebohrung und Wellschlauchende zulassen. Vorzugsweise sind solche Elemente Kugeln. Bei einer solchen Verbindung ist ein nachträgliches Lösen wieder möglich.

Die Erfindung wird nachstehend anhand einiger Ausführungsbeispiele und Zeichnungen näher erläutert. Dabei zeigen:
- Fig. 1a —: Eine schematische Darstellung der erfindungsgemäßen Anschlussverbindung für ein Rohrende eines Glattrohres in einer Aufnahmebohrung, wobei das Glattrohr eine rillenförmige Einschnürung hat.
- Fig. 1b —: Eine schematische Darstellung der erfindungsgemäßen Anschlussverbindung für ein Rohrende eines Glattrohres, wobei die rillenförmige Einschnürung durch Faltung erzeugt ist.
- Fig. 2 —: Eine schematische Darstellung der erfindungsgemäßen Anschlussverbindung für Wellschlauchenden in einer Aufnahmebohrung.
- Fig. 3 —: Ein mögliches Querschnittsprofil für das ringförmige Dichtelement.
- Fig. 4 —: Einen für die Verbindung verwendeten dimensionsstabilen Ring.
- Fig. 5 —: Eine Ausführungsform für den dimensionsstabilen Ring.

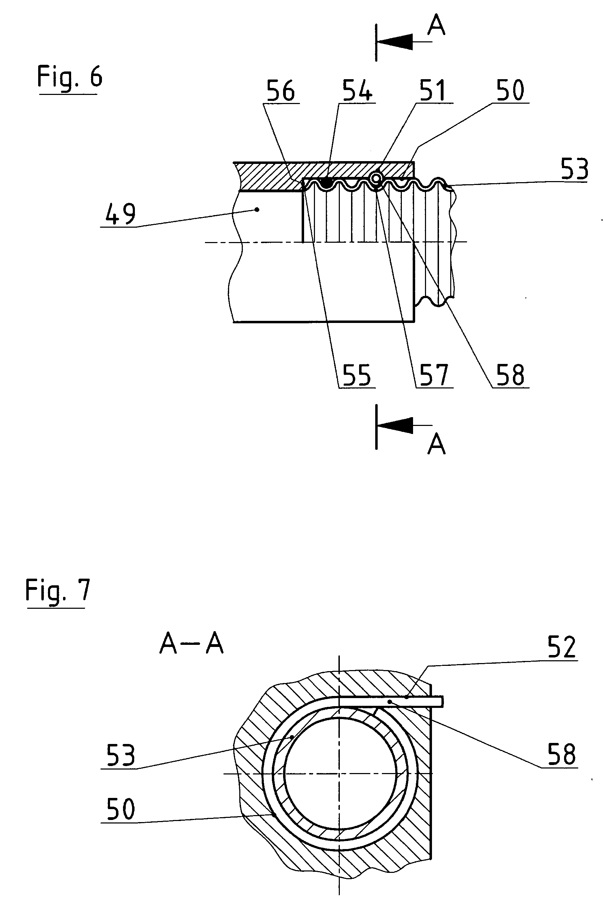

- Fig. 6 —: Eine schematische Darstellung der erfindungsgemäßen Anschlussverbindung mit einer formschlüssigen und unlösbaren Verbindung durch eine umlaufende Kapillare.
- Fig. 7 —: Eine Schnittdarstellung A-A durch die in Fig. 6 gezeigte Anschlussverbindung.

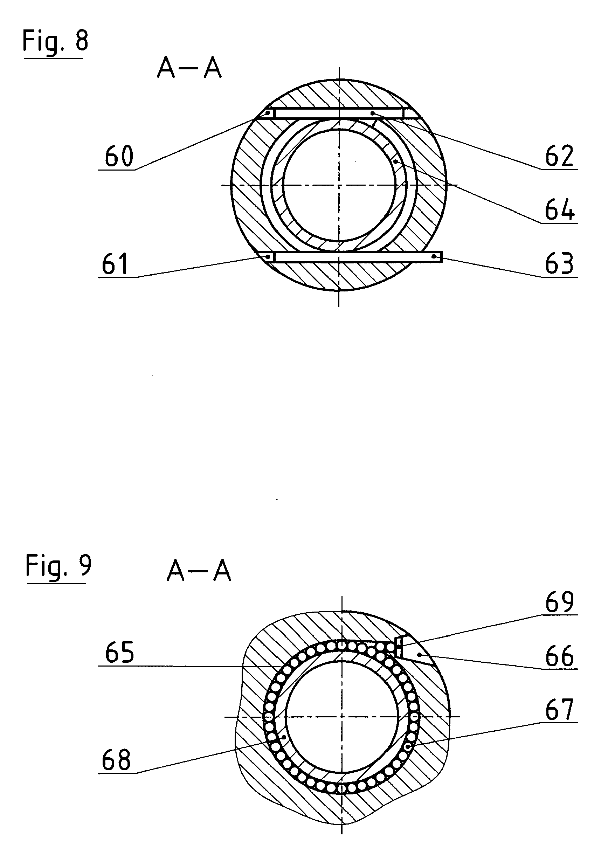

- Fig. 8 —: Eine Ausführungsform einer Anschlussverbindung, bei der die Verstiftung durch einander gegenüberliegende Stifte erfolgt.
- Fig. 9 —: Eine Schnittdarstellung der gleichen Anschlussverbindung, bei der der Formschluss durch eine Vielzahl von Einzelbauteilen erzeugt wird.

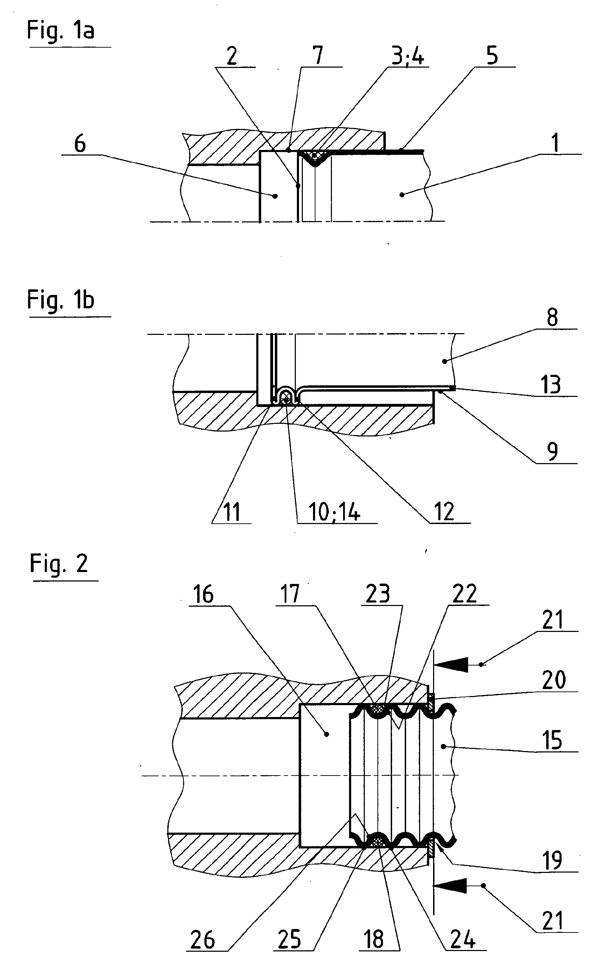

Ein Rohrende 1 ist an seiner Stirnseite 2 profiliert, wobei eine Einschnürung 3 mit einem in etwa dreieckförmigen Querschnitt entstanden ist. Die Einschnürung 3 ist mit einem Dichtelement 4 ausgefüllt. Das Rohrende 1 ist mit einem Außendurchmesser 5 ausgeführt, der in etwa den Innendurchmesser 7 der Aufnahmebohrung 6 entspricht.
Mit einem in Fig. 1a nicht dargestellten Befestigungsmittel ist das Rohrende 1 in der Aufnahmebohrung 6 in seiner Lage fixiert.

Es ist ebenso möglich, wie Fig. 1b zeigt, ein Rohrende 8, dessen Außendurchmesser 9 geringer ist, als der Innendurchmesser 7 der Aufnahmebohrung 6, so zu deformieren, dass eine Einschnürung 10 durch nach außen gerichtete Faltungen 11, 12 der Rohrwandung 13 entstehen. In der Einschnürung 10 ist wiederum ein Dichtelement 14 eingelegt. Wie bereits oben beschrieben ist auch bei dieser Form des Rohranschlusses eine Fixierung durch in Fig. 1b nicht dargestellte Befestigungsmittel möglich.

Fig. 2 zeigt den Anschluss eines Wellschlauchendes 15, wobei dasselbe in eine Aufnahmebohrung 16 eingeführt ist und ein Wellental 17 des Wellschlauchendes 15 ein Dichtelement 18 aufnimmt und das Wellental 17 nahezu vollständig ausfüllt. In einem dahinter angeordneten Wellental 19 ist ein Stützring 20 eingelegt, der durch eine Axialkraft 21 eines nicht dargestellten Befestigungsmittels in dieser Lage gehalten wird und damit das Wellschlauchende 15 in der Aufnahmebohrung 16 fixiert.

Das Dichtelement 4, 14 oder 18 hat eine von der üblichen Kreisform abweichende Querschnittsform, wobei diese sich nach den Erfordernissen des Querschnittes der Einschnürungen 3, 10 oder des Wellentales 17 richtet. So kann ein dreieck-, rechteck-, oval- oder ellipsenförmiger Querschnitt des Dichtelements ausgeführt sein. Die konkrete Ausführungsform richtet sich insbesondere nach den an das Dichtsystem zu stellenden Anforderungen hinsichtlich Druckstufe und notwendigen Flächenpressungen.

Findet das Dichtelement bei unterschiedlichen Wellrohrprofilen Verwendung, kann auch jeweils ein angepasster Profilquerschnitt zum Einsatz kommen.

Die allgemein bevorzugte Querschnittsform ist eine Ovalform, die an ihrer innen liegenden Stirnseite eine Rundung in etwa gleich der Rundung des Wellentales hat und an der gegenüber liegenden Seite ebenso gerundet ist. Ein in diesem Querschnitt ausgeführtes und bei Wellschläuchen angewendetes Dichtelement 18 wird beim Anschluss eines Wellschlauchendes 15 in Richtung der Flanke 22 gedrückt, sodass das Dichtelement 18 im Bereich zwischen der Innenwand 23 der Aufnahmebohrung 16 und des nachfolgenden Wellenberges 24 stärker gequetscht ist und eine entsprechend hohe Flächenpressung entsteht. Indem das Dichtelement 18 eine Deformation erfährt, dehnt es sich in Richtung des davor liegenden Wellenberges 25 und dessen Flanke 26 aus und füllt auf diese Weise das gesamte Wellental 17 aus, was bei Einsatz eines gewöhnlichen Rundringes unmöglich wäre.

Ein Wellschlauchende 27 ist an seiner Stirnseite 28 im Bereich eines Wellentales getrennt, sodass sich eine rechtwinklig zur Wellschlauchleitung verlaufende Trennfläche ergibt und das Wellschlauchende 27 mit einem Wellenberg 29 abschließt. Das endständige Wellental 30 nimmt ein Dichtelement 31 auf, das das Wellschlauchende 27 gegenüber der Bohrung 32 abdichtet. An der Stirnseite 33 des aufnehmenden Bauteils 34 liegt ein dimensionsstabiler Ring 35 an und greift zugleich in ein Wellental 36 des Wellschlauchendes ein. Ein Befestigungsbauteil 37, hier eine Überwurfmutter, wird auf das Ende 38 des aufnehmenden Bauteils 34, das hier einen Gewindestutzen ausbildet, aufgeschraubt und dabei der dimensionsstabile Ring 35 in axialer Richtung verklemmt.

Ein weiteres elastisches Dichtelement 39 ist in einem Wellental 40 angeordnet und kann der Verbesserung der Abdichtung vorliegender Anschlussverbindung dienen.

Eine Schräge 41 der Bohrung 32 kann die Montage des Wellschlauchendes 27 erleichtern.

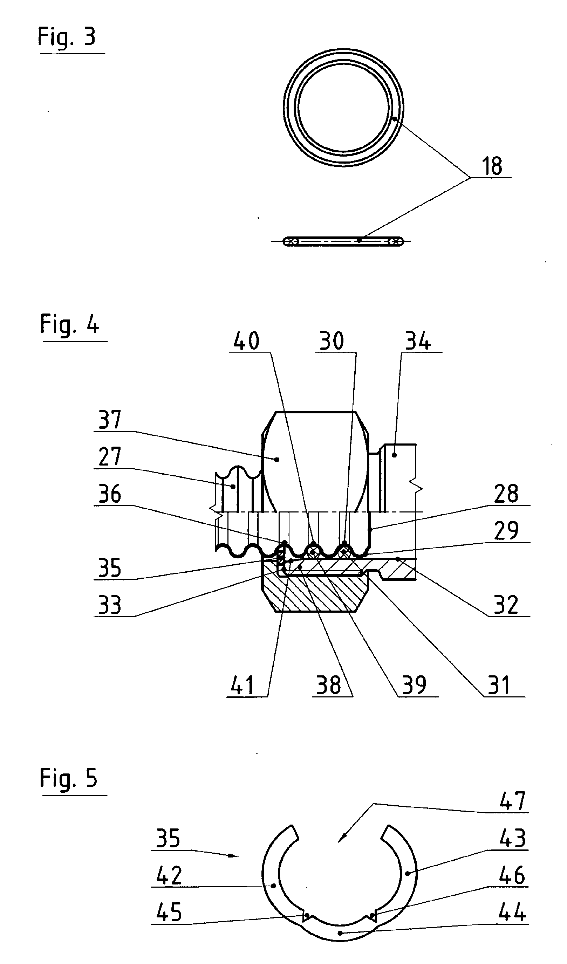

Der dimensionsstabile Ring 35 ist in Fig. 4 in einer teilweise aufgeweiteten Stellung wiedergegeben. Er besitzt ein erstes 42, zweites 43 und ein mittleres Bogensegment 44, die materialeinheitlich miteinander verbunden sind. Die Verbindungsstellen sind mit den Ausnehmungen 45 bzw. 46 so verbunden, dass durch die verminderten Querschnittsflächen Verformungen beim Spreizen bzw. Schließen des dimensionsstabilen Rings 35 sich auf die Bereiche der Verjüngungen 45 und 46 beschränken.

Gegenüber dem mittleren Bogensegment 44 hat der dimensionsstabile Ring 35 eine Öffnung 47, die das Aufschieben auf das Wellschlauchende 27 ermöglicht.

Die erfindungsgemäße Anschlussverbindung kann durch eine Abfolge von Arbeitsschritten erzeugt werden, wobei zunächst auf ein Wellschlauchende 27 ein Befestigungsbauteil 37 aufgeschoben wird. Anschließend wird ein dimensionsstabiler Ring 35 so weit aufgeweitet, dass er sich auf das Wellschlauchende 27 aufschieben lässt und bei Erreichen des dafür vorgesehenen Wellentals 36 des Wellschlauchendes 27 wieder geschlossen.

Nachfolgend wird ein elastisches Dichtelement 31 in das endständige Wellental 30 eingelegt.

Das so vorbereitete Wellschlauchende 27 wird sodann in die Bohrung 32 des aufnehmenden Bauteils 34 eingeschoben, bis der dimensionsstabile Ring 35 an der Stirnseite 33 des aufnehmenden Bauteils 34 anliegt.

Anschließend wird das Befestigungsbauteil 37 mit dem aufnehmenden Bauteil 34 fest verbunden und dabei der dimensionsstabile Ring 35 zwischen beiden verklemmt.

Eine weitere Ausgestaltung der Verbindung sieht ein zusätzliches Dichtelement 39 vor, das in einem zusätzlichen Arbeitsschritt in einem weiteren Wellental 40 des Wellschlauchendes angeordnet wird.

Der dimensionsstabile Ring 35 kann auch aus einem Feder-Werkstoff erzeugt sein. Weiterhin kann er einen rechteckigen, trapezförmigen, kreisförmigen, halbkreisförmigen oder einen an das Profil eines Wellentals angepassten Querschnitt haben.

Das Dichtelement kann ein Profilring sein. Dieser hat zweckmäßigerweise in Richtung zu den abzudichtenden Flächen oder überhaupt ein Übermaß.

Vorteilhafte Ausführungsformen des Profilringes sind solche mit einem dreieck-, trapez-, rechteck- oder ovalförmigen Querschnitt.

Eine besonders bevorzugte Form des Profilringes hat eine Querschnittsform, bei der die Kontaktflächen zu den Wellenbergen hin jeweils plan und die sich gegenüber liegenden planen Flächen in einem Winkel zueinander gehalten sind, der in etwa dem Winkel entspricht, den die Kontaktflächen der Wellenberge an dieser Stelle haben. Die Kontaktfläche zur Bohrungswandung hin und die zum Wellental hin zeigende Fläche hingegen sind gewölbt ausgeführt.

Eine Vorzugsform entspricht in etwa einem Rundring, der im Bereich der Kontaktflächen zu den Wellenbergen partiell Planflächen hat.

Der Profilring besteht aus einem elastischen Werkstoff, der auch geschäumt sein kann. Die Werkstoffparameter sind ebenso wie die Formmerkmale an die im Einsatzfall vorliegenden Parameter anzupassen.

Eine Ausführungsform des Profilringes kann auch ein Rundring sein, sofern dieser von der Dimensionierung her und seinen übrigen Parametern die gestellte Aufgabe lösen kann.

Es ist weiterhin möglich, die Profilringe an ihrer Außenfläche mit einer Beschichtung zu versehen.

Das Befestigungsbauteil 37 kann jede Art eines Befestigungsmittels sein, sofern es ein Verklemmen des dimensionsstabilen Rings 35 gegenüber dem aufnehmenden Bauteil 34 ermöglicht.

Das aufnehmende Bauteil 34 kann eine Gewindehülse, ein Einschraubstutzen oder ein beliebiges anderes Bauteil, das die Bohrung 32 aufnimmt, sein.

Eine Ausführungsform der Anschlussverbindung für einen Wellschlauch sieht vor, dass in einem Befestigungsbauteil 49 eine Aufnahmebohrung 50 und in dieser eine umlaufende Rille 51 vorhanden ist. Die umlaufende Rille 51 ist über eine Verbindungsbohrung 52 nach außen geführt.

Das Wellschlauchende 53 ist am endständigen Wellental mit dem erfindungsgemäßen Dichtelement 54 versehen und stößt mit seinem vorderen Ende 55 an den Bohrungsgrund 56 der Aufnahmebohrung 50 an.

Ein Wellental 57 des Wellschlauchendes 53 liegt der Rille 51 diametral gegenüber. Über die Verbindungsbohrung 52 wird eine Kapillare 58 eingeführt, wobei diese entlang der Rille 51 und dem gegenüber stehenden Wellental 57 geführt ist. Nach Erreichen einer nahezu vollständigen Umschlingung des Wellschlauchendes 53 kann die Kapillare 58 abgeschnitten werden und die Verbindung ist unlösbar.

Anstelle einer Kapillare 58 kann auch ein Draht entsprechenden Durchmessers eingeschoben werden.

Eine weitere Ausführungsform der oben beschriebenen Verbindung sieht gleichfalls eine Verstiftung vor, wobei die Aufnahmebohrung 59 durch Querbohrungen 60 und 61 tangiert und in jede der Bohrungen 60 und 61 ein Stift 62 und 63 eingeführt wird. Das Wellschlauchende 64 ist somit an zwei gegenüber liegenden Bereichen fixiert.

Eine weitere Ausführungsform einer solchen Anschlussverbindung sieht vor, dass die umlaufende Nut 65 über eine Verbindungsbohrung 66 mit Füllkörpern 67 angefüllt wird. Die Füllkörper 67 halten das Wellschlauchende 68 wiederum formschlüssig. Ein Verschlusselement 69 sichert die Füllkörper 67 gegen Herausfallen, kann bei bestimmten Ausführungsformen jedoch auch zum Lösen der Verbindung abgenommen werden.

Die Erfindung hat also den Vorteil, dass sie die Herstellung einer Anschlussverbindung für Rohr- oder Wellschlauchenden auf einfache Weise, mit einem begrenzten Sortiment an zusätzlichen Bauteilen und in großer Variantenvielfalt bei nur geringen Anforderungen an die Qualifizierung ausführender Personen ermöglicht und insoweit sowohl bei industriellen Anwendungen als auch bei Montagearbeiten im Installationsbereich ohne Schwierigkeiten angewendet werden kann.

### Bezugszeichenliste

- 1: Rohrende
- 2: Stirnseite
- 3: Einschnürung
- 4: Dichtelement
- 5: Außendurchmesser
- 6: Aufnahmebohrung
- 7: Innendurchmesser der Aufnahmebohrung [6]
- 8: Rohrende
- 9: Außendurchmesser
- 10: Einschnürung
- 11: Faltung
- 12: Faltung
- 13: Rohrwandung
- 14: Dichtelement
- 15: Wellschlauchende
- 16: Aufnahmebohrung
- 17: Wellental
- 18: Dichtelement
- 19: Wellental
- 20: Stützring
- 21: Axialkraft
- 22: Flanke
- 23: Innenwand der Aufnahmebohrung [16]
- 24: Wellenberg
- 25: davor liegender Wellenberg
- 26: Flanke des Wellenberges [25]
- 27: Wellschlauchende
- 28: Stirnseite
- 29: Wellenberg
- 30: Endständiges Wellental
- 31: Dichtelement
- 32: Bohrung
- 33: Stirnseite
- 34: Aufnehmendes Bauteil
- 35: Dimensionsstabiler Ring
- 36: Wellental
- 37: Befestigungsbauteil
- 38: Ende des aufnehmenden Bauteils [34]
- 39: Dichtelement
- 40: Wellental
- 41: Schräge
- 42: Erstes Bogensegment
- 43: Zweites Bogensegment
- 44: Mittleres Bogensegment
- 45: Ausnehmung
- 46: Ausnehmung
- 47: Öffnung
- 48: Einführschräge
- 49: Befestigungsbauteil
- 50: Aufnahmebohrung
- 51: Rille
- 52: Verbindungsbohrung
- 53: Wellschlauchende
- 54: Dichtelement
- 55: Vorderes Ende
- 56: Bohrungsgrund
- 57: Wellental
- 58: Kapillare
- 59: Aufnahmebohrung
- 60: Querbohrung
- 61: Querbohrung
- 62: Stift
- 63: Stift
- 64: Wellschlauchende
- 65: Nut
- 66: Verbindungsbohrung
- 67: Füllkörper
- 68: Wellschlauchende
- 69: Verschlusselement

## Patentansprüche

1. Anschlussverbindung für ein Rohr,
bei der ein Rohr- (1), (8) oder Wellschlauchende (15), (27), (53), (64), (68) von einer Aufnahmebohrung (6), (16), (50), (59) oder einer Bohrung (32) aufgenommen ist, die in einem die Aufnahmebohrung (6), (16), (50), (59) oder die Bohrung (32) umgebendem Bauteil angeordnet ist,
das Rohrende (1), (8) wenigstens eine umlaufende Einschnürung (3), (10) oder das Wellschlauchende (15), (27), (53), (64), (68) ein endständiges Wellental (17), (30) hat,
in der umlaufenden Einschnürung (3), (10) beziehungsweise dem Wellental (17), (30) ein Dichtelement (4), (14), (18), (31), (54) angeordnet ist und ein Befestigungselement auf dem Rohr angeordnet ist,
**dadurch gekennzeichnet, dass**
das Dichtelement (4), (14), (18), (31), (54) ein Ring mit einem von der Kreisform abweichenden Querschnitt ist.

2. Anschlussverbindung nach Anspruch 1,
**dadurch gekennzeichnet, dass**
das Dichtelement (4), (14), (18), (31), (54) ein Profilring mit einem dreieck-, trapez-, rechteck-, oval- oder ellipsenförmigen Querschnitt ist.

3. Anschlussverbindung für ein Rohr nach Anspruch 1 oder 2,
**dadurch gekennzeichnet, dass**
das Rohr ein Glattrohr mit einer rillenförmig profilierten Einschnürung (3), ein dünnwandiges Rohr mit einer durch Umformen erzeugten rillenförmigen Einschnürung (10) oder ein ringgewellter Wellschlauch ist.

4. Anschlussverbindung für ein Rohr nach einem der Ansprüche 1 bis 3,
**dadurch gekennzeichnet, dass**
das Rohrende (1), (8) oder das Wellschlauchende (15), (27), (53), (64), (68) und das Dichtelement (4), (14), (18), (31), (39) in einer zylindrischen Aufnahmebohrung (6), (16) oder einer Bohrung (32) angeordnet sind.

5. Anschlussverbindung für ein Rohr nach einem der Ansprüche 1 bis 4,
**dadurch gekennzeichnet, dass**
auf dem Rohr ein Befestigungselement angeordnet ist.

6. Anschlussverbindung für ein Rohr nach Anspruch 5,
**dadurch gekennzeichnet, dass**
zwischen dem umgebenden Bauteil und dem Befestigungselement ein Stützelement angeordnet ist, das die Fähigkeit hat, eine Axialkraft vom Befestigungselement auf das Rohr zu übertragen.

7. Anschlussverbindung nach Anspruch 6,
**dadurch gekennzeichnet, dass**
das Stützelement:
ein einseitiger offener, dimensionsstabiler Ring (35) ist, der unter Deformation und/oder durch elastische Verformung aufweitbar und schließbar ist,
einen rechteckigen, trapezförmigen, ovalförmigen, kreisförmigen oder einen an das Wellenprofil des Wellrohres oder Wellschlauches angepassten Querschnitt hat
und in seinem Umfang wenigstens eine querschnittsvermindernde Ausnehmung (45), (46) hat, die deformierbar ist.

8. Anschlussverbindung nach einem der Ansprüche 1 bis 7,
**dadurch gekennzeichnet, dass**
ein zweites elastisches Dichtelement (39) in einem hinter dem endständigen Wellental (17), (30) liegenden Wellental (40) angeordnet ist, wobei das zweite Dichtelement (39) ein Profilring oder ein Rundring ist.

9. Anschlussverbindung nach einem der Ansprüche 1 bis 8,
**dadurch gekennzeichnet, dass**
diese zum Anschluss eines Wellschlauchendes Verwendung findet.

10. Anschlussverbindung für ein Rohr nach Anspruch 1,
**dadurch gekennzeichnet, dass**
das Befestigungselement ein in ein Wellental (57) eines Wellschlauchendes (53) eingreifender Draht oder eine Kapillare (58) ist, der mit einer rillenförmigen Vertiefung (51), die in der Aufnahmebohrung (59) angeordnet ist, in Verbindung steht.

11. Anschlussverbindung für ein Rohr nach Anspruch 1,
**dadurch gekennzeichnet, dass**
das Befestigungselement ein in ein Wellental (57) eines Wellschlauchendes (53; 64) eingreifendes Medium ist, das aus einer aushärtenden und/oder sich verfestigenden Masse
oder
einer Anzahl Einzelelemente besteht, die mit einer rillenförmigen Vertiefung (65), die in der Aufnahmebohrung angeordnet ist, in Verbindung stehen.

12. Anschlussverbindung für ein Rohr nach Anspruch 1,
**dadurch gekennzeichnet, dass**
das Befestigungselement wenigstens ein in ein Wellental eines Wellschlauchendes (64) eingreifender Stift (62; 63) ist, der in einer Querbohrung (60; 61) zur Aufnahmebohrung eingeschoben ist.

13. Verfahren zur Herstellung einer Anschlussverbindung für ein Rohr nach einem der Ansprüche 1 bis 7,
**dadurch gekennzeichnet, dass**
nachstehende Arbeitsschritte aufeinander folgend ausgeführt werden:
- Aufschieben eines Befestigungsbauteils auf ein Wellrohr- oder Wellschlauchende,
- Aufweiten eines elastischen Dichtelements, Positionieren desselben über einem endständigen Wellental und Entspannen desselben, sodass es teilweise in das Wellental eindringt,
- Einführen des Wellrohr- oder Wellschlauchendes in eine Aufnahmebohrung,
- Herstellen einer festen Verbindung zwischen dem die Aufnahmebohrung ausbildenden Bauteil und dem Befestigungsbauteil.

14. Verfahren zur Herstellung einer Anschlussverbindung für ein Rohr nach
Anspruch 13,
**dadurch gekennzeichnet, dass**
ein dimensionsstabiler Ring aufgeweitet und unter gleichzeitiger Deformation in einer Nut eines Wellentales positioniert und anschließend durch Schließen des dimensionsstabilen Rings bei gleichzeitiger Deformation befestigt wird.

15. Verfahren zur Herstellung einer Anschlussverbindung für ein Rohr nach
Anspruch 13,
**dadurch gekennzeichnet, dass**
eine Kapillare oder ein Draht oder eine sich verfestigende oder eine durch eine chemische Reaktion aushärtende Masse in eine rillenförmige Vertiefung der Aufnahmebohrung eingebracht werden.

16. Verfahren zur Herstellung einer Anschlussverbindung für ein Rohr nach
Anspruch 13,
**dadurch gekennzeichnet, dass**
ein Stift in eine die Aufnahmebohrung tangierende Querbohrung eingeschoben wird.
